# FASCICULE DE BREVET EUROPEEN

(11) **EP 0 338 594 B1**
(45) Date de publication et mention de la délivrance du brevet: **13.04.1994**
(21) Numéro de dépôt: 89109696.8
(22) Date de dépôt: 07.09.1983
(51) Int. Cl.: H04N 7/167

(54) **Dispositif de déchiffrement d'un signal de télévision**
Fernsehsignalentschlüsselungsgerät
Television signal descrambling device

(30) Priorité: 14.09.1982 FR 8215533
(43) Date de publication de la demande: 25.10.1989
(62) Demande divisionnaire de: 83201293.4
(73) Titulaire: PHILIPS ELECTRONIQUE GRAND PUBLIC, 92150 Suresnes (FR)
(72) Inventeur: Marie, Gérard Société Civile S.P.I.D., F-75007 Paris (FR); Arragon, Jean-Pierre Société Civile S.P.I.D., F-75007 Paris (FR)
(74) Mandataire: Landousy, Christian

(56) Documents cités:
- EP-A- 0 018 783
- FR-A- 2 431 809

## Description

La présente invention concerne un dispositif de déchiffrement d'un signal de télévision, comprenant des moyens pour fractionner, en une position définie de façon pseudo-aléatoire, les signaux vidéo des lignes de balayage dans les périodes situées entre les périodes de synchronisation et pour changer l'ordre de fractions du signal vidéo ainsi constituées.

La demande de brevet français n° 78 21 888 déposée le 20 juillet 1978 au nom de l'Etablissement Public de Diffusion dit "Télédiffusion de France" et publiée le 15 février 1980 sous le n° 2 431 809 décrit un dispositif de déchiffrement d'un signal de télévision tel que défini ci-dessus.

Le but de l'invention est de procurer un dispositif de déchiffrement simple et économique pour un système de transmission à multiplexage temporel de composantes analogiques (dit M.A.C. d'après l'expression anglaise équivalente "Multiplexed Analogue Components") proposé notamment dans le rapport 116/81 -UDC 621.396.946 "Direct television broadcasts by satellite : desirability of a new transmission standard" par K. Lucas et M.D. Windram, Independant Broadcasting Authority (IBA), Crawley court, Winchester, Hants, SO21 -2QA, ou également, plus récemment, dans l'article "Television systems for D B S " paru dans la revue "The Radio and Electronic Engineer", Vol.52, n°7, juillet 1982, p.311 et suivantes. Ce système M.A.C. assure la transmission successive, pour chaque ligne de balayage, des composantes de chrominance et de luminance : un exemple de signal M.A.C. est représenté sur la figure 5 du rapport cité.

L'invention concerne à cet effet un dispositif tel que défini précédemment et caractérisé en ce que le dispositif est constitué pour le déchiffrement d'un signal de télévision selon un système du type MAC et comprend un jeu de mémoires de luminance adressées alternativement par un compteur d'écriture et un premier compteur de lecture pour l'écriture des signaux de luminance brouillés et pour la lecture des signaux de luminance déchiffrés, ainsi qu'un jeu de mémoires de chrominance adressées alternativement par le compteur d'écriture et un deuxième compteur de lecture pour l'écriture des signaux de chrominance brouillés et pour la lecture des signaux de chrominance déchiffrés, la fréquence de lecture de chrominance étant inférieure à la fréquence de lecture de luminance et ces deux fréquences de lecture étant inférieures à la fréquence d'écriture, de telle sorte que les signaux de luminance déchiffrés et les signaux de chrominance déchiffrés sont chacun restitués en un temps correspondant au temps de balayage utile de la ligne.

En conséquence, le dispositif selon l'invention comprend des jeux de mémoires qui sont utilisés aussi bien pour le déchiffrement des signaux de luminance brouillés et des signaux de chrominance brouillés que pour l'expansion usuelle des signaux de luminance et de chrominance dans le temps de balayage utile de la ligne, expansion qui fait suite à la compression temporelle réalisée préalablement.

Dans la demande internationale W0 83/03942 publiée le 10 novembre 1983, on a déjà proposé un dispositif de déchiffrement d'un signal du type M.A.C. dans lequel on fractionne le mot numérique de ce signal et on change l'ordre de fractions du signal ainsi constituées. Les jeux de mémoires qui servent à ce changement d'ordre ne sont cependant pas utilisés pour l'expansion des signaux de luminance et de chrominance.

Les particularités de cette invention apparaîtront maintenant de façon plus précise dans la description qui suit et dans les dessins annexés, donnés à titre d'exemple et dans lesquels :
- les figures 1a et 1b représentent respectivement pour une ligne de balayage, un exemple de signal vidéo de type M.A.C. non brouillé, et ce même signal mais brouillé ;
- la figure 2 montre un exemple de réalisation d'un dispositif de déchiffrement de signaux vidéo ainsi brouillés.

Le procédé de transmission de signaux M.A.C prévoit pour chaque ligne de balayage, comme le montre par exemple la figure 5 déjà citée du rapport IBA, la transmission successive d'un mot de synchronisation ligne, d'une période de référence au niveau zéro de chrominance, du signal de chrominance, d'une période de référence au niveau du noir, et du signal de luminance. Les avantages d'une telle structure de signal apparaissent en page 8, colonne 2, du rapport, et ne seront pas repris ici, le principal d'entre eux étant cependant le caractère successif de la transmission qui entraîne la disparition de l'enchevêtrement des spectres de chrominance et de luminance ; cette imbrication nécessitait en effet des traitements bien connus mais relativement complexes pour la reconstitution de l'image à la réception.

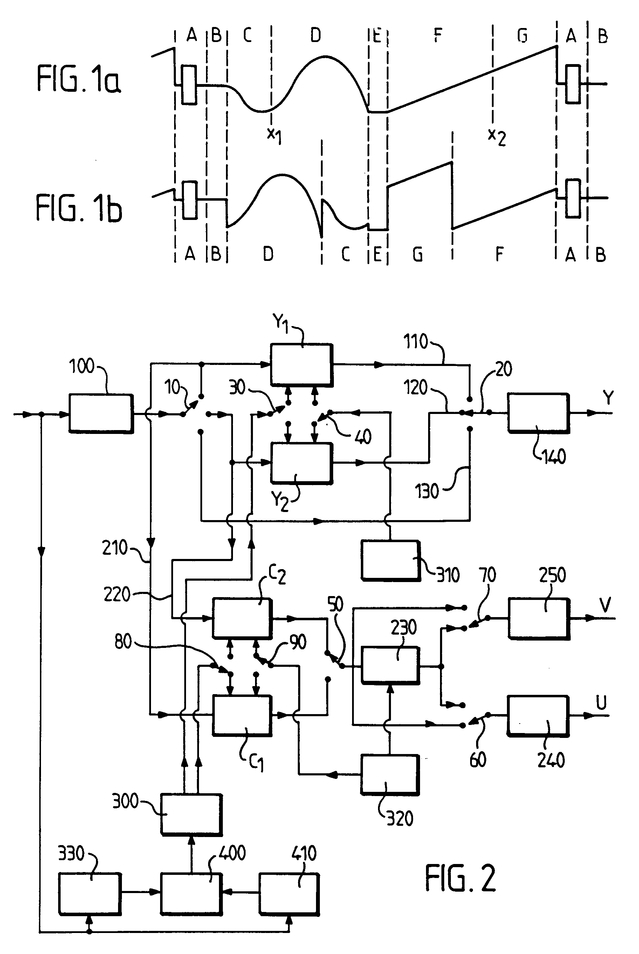

Le procédé de brouillage selon la figure 1 consiste, à l'émission, à fractionner sur chaque ligne de balayage les deux composantes de chrominance et de luminance, indépendamment l'une de l'autre, chacune en deux signaux consécutifs dont le premier est alors retardé de la durée du second et le second avancé de la durée du premier. Ce procédé est bien mis en évidence sur la figure 1, où la figure 1a montre le signal vidéo de type M.A.C., non brouillé, pour une ligne de balayage, et la figure 1b ce même signal mais brouillé : par rapport au signal non brouillé composé du mot de synchronisation A, des périodes de référence B et E, du signal de chrominance CD et du signal de luminance FG (ces deux derniers signaux étant représentés avec des formes quelconques, bien distinctes pour la compréhension du traitement effectué), le signal brouillé est donc transmisselon la séquence ABDCEGF, qui n'affecte pas la période de référence E. Le traitement à la réception consiste alors à assurer le rétablissement des séquences d'origine, pour la reconstitution en clair des composantes de chrominance et de luminance de la ligne de balayage considérée.

Cette reconstitution est possible par exemple à l'aide du dispositif de déchiffrement représenté sur la figure 2 et qui comprend les éléments essentiels d'un décodeur classique numérique de signaux vidéo de type M.A.C. auxquels sont associés, selon l'invention, une modification du compteur d'adressage écriture des mémoires, un générateur de séquences numériques pseudoaléatoires et, pour la commande de ce dernier, un circuit de contrôle d'accès. Plus précisément, ce dispositif de déchiffrement est composé des éléments suivants :
(1) des circuits d'entrée comprenant eux-mêmes :
   (a) un convertisseur analogique-numérique 100 qui reçoit les signaux M.A.C. brouillés ;
   (b) un commutateur 10 comprenant une entrée reliée à la sortie dudit convertisseur analogique-numérique et trois sorties ;
(2) des circuits de traitement de la composante de luminance comprenant eux-mêmes :
   (c) un ensemble de trois voies en parallèle 110, 120, 130, qui relient les trois sorties de ce commutateur 10 aux trois entrées d'un commutateur 20, les première et deuxième voies 110 et 120 comprenant respectivement une première et une deuxième mémoire Y₁ et Y₂ de stockage de la composante de luminance, adressées alternativement par un compteur d'écriture 300 et un premier compteur de lecture 310, alors que la troisième voie 130 est une voie directe ;
   (d) un premier convertisseur numérique-analogique 140 qui reçoit la sortie du commutateur 20 et délivre le signal de luminance couramment appelé Y ;
(3) des circuits de traitement de la composante de chrominance comprenant eux-mêmes :
   (e) un ensemble de deux voies en parallèle210 et 220 qui, par l'intermédiaire d'une troisième et d'une quatrième mémoire C₁ et C₂ de stockage de la composante de chrominance adressées alternativement par le compteur d'écriture 300 et un deuxième compteur de lecture 320, sont reliées respectivement aux deux entrées d'un commutateur 50, la sortie de ce commutateur étant reliée d'une part à l'entrée d'une ligne à retard numérique 230 commandée par le compteur de lecture 320 (et réalisée par exemple sous forme d'un registre à décalage) pour retarder de la durée d'une ligne la composante de chrominance, et d'autre part à la première entrée respectivement d'un commutateur 60 et d'un commutateur 70 dont l'autre entrée reçoit la sortie de ladite ligne à retard ;
   (f) des deuxième et troisième convertisseurs numériques-analogiques 240 et 250 qui reçoivent la sortie des commutateurs 60 et 70 respectivement et délivrent les signaux de différence de couleur couramment appelés U et V ;
(4) des circuits de commande de déchiffrement :
   (g) un compteur 330 des lignes à l'intérieur de chaque trame ;
   (h) un générateur de séquences numériques pseudoaléatoires 400 synchronisé par l'intermédiaire du compteur de lignes 330 ;
   (i) un circuit de contrôle d'accès 410 qui fournit au générateur de séquences pseudoaléatoires un mot de départ constituant la clé de brouillage.

Le fonctionnement du dispositif de déchiffrement ainsi composé est le suivant. Le générateur de séquences pseudoaléatoires 400, qui est synchronisé par le compteur 330 et qui reçoit du circuit de contrôle d'accès 410 la clé déchiffrée par celui-ci dès la réception des signaux M.A.C. brouillés, génère un mot numérique aléatoire dont on déduit les deux abscisses x₁ et x₂ des points de fractionnement des composantes analogiques de chrominance et de luminance, obtenus lors du brouillage à l'émission. Dès lors, à la réception des signaux, on écrit la période B en début de mémoire, puis la fraction D, en commençant à l'adresse de l'abscisse x₁, et la fraction C entre B et D ; cette écriture est effectuée successivement dans la mémoire C₁ ou la mémoire C₂ suivant la parité de la ligne, à l'aide du compteur d'écriture 300 commandé par le générateur de séquences pseudoaléatoires 400 et adressant l'une ou l'autre des deux mémoires en fonction de la position d'un commutateur 80.

L'écriture de la composante de chrominance étant achevée, on écrit de même, successivement dans la mémoire Y₁ ou la mémoire Y₂ suivant la parité de la ligne et à l'aide du même compteur d'écriture 300 qui adresse l'une ou l'autre de ces deux mémoires en fonction de la position d'un commutateur 30, la période de référence E en début de mémoire, puis la fraction G en commençant à l'adresse de l'abscisse x₂, et la fraction F entre E et G.

Enfin, pour restituer les signaux luminance et chrominance, on relit simultanément dans l'ordre croissant des adresses les mémoires Y₁ et C₁, ou Y₂ et C₂, à l'aide des compteurs 310 et 320. Les fréquences de lecture des mémoires luminance et chrominance sont choisies de telle sorte que les signaux utiles FG et CD sont restitués en un temps correspondant au temps de balayage utile de la ligne, soit 52 microsecondes environ dans le standard européen actuel 625 lignes. La fréquence de lecture chrominance est donc inférieure à la fréquence de lecture luminance qui elle-même est inférieure à la fréquence d'écriture du compteur 300. Le compteur de lecture 320 adresse les mémoires C₁ et C₂ alternativement par l'intermédiaire d'un commutateur 90, et le compteur 310 les mémoires Y₁ et Y₂ alternativement par l'intermédiaire d'un commutateur 40.

On notera ici que les neuf commutateur 10 à 90 sont commandés par le compteur 330, mais ces liaisons de commande ne sont pas représentées, afin de ne pas surcharger la figure 2.

La présence de la ligne à retard numérique 230 n'est pas liée au déchiffrement lui-même ; cette ligne à retard est prévue pour permettre la restitution simultanée, en sortie des convertisseurs numériques-analogiques 240 et 250, des signaux de différence de couleur U et V qui sont transmis alternativement. La commande de cette ligne à retard 230 est assurée par le compteur de lecture 320 des mémoires C₁ et C₂.

Comme dans la demande de brevet citée, et dans le but d'éliminer les défauts qui peuvent résulter du fractionnement des composantes de chrominance et de luminance, on aura intérêt à représenter à la fin des fractions C et F une courte partie du début des fractions D et G respectivement. Pour que la durée du signal transmis reste inchangée, il faudra alors supprimer à la fin des signaux D et G deux parties de signal de durées égales respectivement à celles des parties répétées.

## Revendications

1. Dispositif de déchiffrement d'un signal de télévision, comprenant des moyens pour fractionner, en une position définie de façon pseudoaléatoire, les signaux vidéo des lignes de balayage dans les périodes situées entre les périodes de synchronisation et pour changer l'ordre de fractions du signal vidéo ainsi constituées, caractérisé en ce que le dispositif est constitué pour le déchiffrement d'un signal de télévision selon un système du type MAC et comprend un jeu de mémoires (Y₁, Y₂) de luminance adressées alternativement par un compteur d'écriture (300) et un premier compteur de lecture (310) pour l'écriture des signaux de luminance brouillés et pour la lecture des signaux de luminance déchiffrés, ainsi qu'un jeu de mémoires (C₁, C₂) de chrominance adressées alternativement par le compteur d'écriture et un deuxième compteur de lecture (320) pour l'écriture des signaux de chrominance brouillés et pour la lecture des signaux de chrominance déchiffrés, la fréquence de lecture de chrominance étant inférieure à la fréquence de lecture de luminance et ces deux fréquences de lecture étant inférieures à la fréquence d'écriture, de telle sorte que les signaux de luminance déchiffrés et les signaux de chrominance déchiffrés sont chacun restitués en un temps correspondant au temps de balayage utile de la ligne.

## Claims

1. A television signal descrambling device comprising means for splitting up the video signals of the scanning lines at a pseudo-randomly defined position in the periods between the synchronizing periods, and for changing the order of the video signal portions thus constituted, characterized in that the device is constituted for descrambling a television signal in accordance with a system of the MAC type and comprises a set of luminance memories (Y₁, Y₂) which are alternately addressed by a write counter (300) and a first read counter (310) for writing the scrambled luminance signals and for reading the descrambled luminance signals, as well as a set of chrominance memories C₁, C₂) which are alternately addressed by the write counter and a second read counter (320) for writing the scrambled chrominance signals and for reading the descrambled chrominance signals, the chrominance read rate being smaller than the luminance read rate and said two read rates being smaller than the write rate, such that the descrambled luminance signals and the descrambled chrominance signals are each recovered in a time corresponding to the useful scanning time of the line.

## Patentansprüche

1. Fernsehsignal-Entschlüsselungsanordnung mit Mitteln zum Aufteilen der Video-Signale der Abtastzeilen in eine pseudo-beliebig definierte Position in den Perioden zwischen den Synchronisationsperioden und zum Ändern der Reihenfolge der auf diese Weise gebildeten Video-Signalteile, dadurch gekennzeichnet, daß die Anordnung zum Entschlüsseln eines Fernsehsignals entsprechend einem System vom MAC-Typ ausgebildet ist und einen Satz von Leuchtdichtespeichern (Y₁, Y₂) aufweist, die durch jeweils einen Schreibzähler (300) und einen ersten Lesezähler (310) adressiert werden zum Schreiben der verschlüsselten Leuchtdichtesignale bzw. zum Lesen der entschlüsselten Leuchtdichtesignale, sowie einen Satz von Farbartspeichern (C₁, C₂), die durch den Schreibzähler und einen zweiten Lesezähler (320) zum Schreiben der verschlüsselten Farbartsignale bzw. zum Lesen der entschlüsselten Farbartsignale adressiert werden, wobei die Farbartleserate kleiner ist als die Leuchtdichteleserate und wobei beiden Leseraten kleiner sind als die Schreibrate, und zwar derart, daß die entschlüsselten Leuchtdichtesignale und die entschlüsselten Farbartsignale je während einer Zeit entsprechend der nützlichen Zeilenabtastzeit abgegeben werden.
